# EUROPÄISCHE PATENTSCHRIFT

(11) **EP 2 720 032 B1**
(45) Veröffentlichungstag und Bekanntmachung des Hinweises auf die Patenterteilung: **20.01.2016**
(21) Anmeldenummer: 12188308.6
(22) Anmeldetag: 12.10.2012
(51) Int. Cl.: G01N 23/207, C22F 1/18

(54) **Mikrostrukturanalyse zur Qualitätskontrolle für TiAl-Bauteile**
Microstructure analysis for the quality control of TiAl components
Analyse de microstructure pour le contrôle qualité de composants TiAl

(43) Veröffentlichungstag der Anmeldung: 16.04.2014
(73) Patentinhaber: MTU Aero Engines AG, 80995 München (DE)
(72) Erfinder: Dr. Heutling, Falko, 81377 München (DE); Dr Helm, Dietmar, 85757 Karlsfeld (DE)

(56) Entgegenhaltungen:
- FR-A- 1 372 622
- John Thomas Creasy: "THERMAL PROPERTIES OF URANIUM-MOLYBDENUM ALLOYS: PHASE DECOMPOSITION EFFECTS OF HEAT TREATMENTS", , 1. Dezember 2011 (2011-12-01), XP055052113, College Station, Texas, USA Gefunden im Internet: URL:http://repository.tamu.edu/bitstream/h andle/1969.1/ETD-TAMU-2011-12-10625/CREASY -THESIS.pdf?sequence=2 [gefunden am 2013-02-01]
- NOVOSELOVA T ET AL: "Experimental study of the effects of heat treatment on microstructure and grain size of a gamma TiAl alloy", INTERMETALLICS, ELSEVIER SCIENCE PUBLISHERS B.V, GB, Bd. 11, Nr. 5, 1. Mai 2003 (2003-05-01), Seiten 491-499, XP004415938, ISSN: 0966-9795, DOI: 10.1016/S0966-9795(03)00028-1
- LISS K D ET AL: "Recrystallization and phase transitions in a gamma-TiAl-based alloy as observed by ex situ and in situ high-energy X-ray diffraction", ACTA MATERIALIA, ELSEVIER, OXFORD, GB, Bd. 54, Nr. 14, 1. August 2006 (2006-08-01), Seiten 3721-3735, XP025027674, ISSN: 1359-6454, DOI: 10.1016/J.ACTAMAT.2006.04.004 [gefunden am 2006-08-01]

## Beschreibung

### HINTERGRUND DER ERFINDUNG

### GEBIET DER ERFINDUNG

Die vorliegende Erfindung betrifft ein Verfahren zur Qualitätskontrolle von Bauteilen, und zwar hinsichtlich der Überprüfung der Mikrostruktur des entsprechenden Bauteils. Insbesondere betrifft die vorliegende Erfindung ein Verfahren zu Qualitätskontrolle von Bauteilen, die ein Gefüge aufweisen, welches mindestens eine Phase umfasst, die in mindestens zwei unterschiedliche Formen im Gefüge der Bauteile vorliegt.

### STAND DER TECHNIK

Werkstoffe, die in der Technik für unterschiedlichste Bauteile eingesetzt werden, weisen gemäß ihrer Mikrostruktur bestimmte Eigenschaften auf, sodass bei bestimmten Anwendungen die Mikrostruktur der erzeugten Bauteile überprüft werden muss, um sicher zu stellen, dass die Bauteile die gewünschten Eigenschaften aufweisen. Ein Beispiel hierfür sind Bauteile aus Titanaluminid - Legierungen für technisch anspruchsvolle Anwendungen, wie zum Beispiel für Bauteile im Triebwerksbau oder als Turbolader oder als Motorenventile. Diese Bauteile unterliegen im Einsatz extremen thermischen und mechanischen Beanspruchungen, sodass es erforderlich ist, dass die Mikrostruktur der verwendeten TiAl - Werkstoffe die gewünschte Mikrostruktur aufweist, um mit ihrem Eigenschaftsprofil den entsprechenden Anwendungen zu genügen.

So werden im Triebwerksbau beispielsweise dreiphasige TiAl - Legierungen eingesetzt, wie z.B. so genannte TNM-Legierungen, die neben den Hauptbestandteilen Titan und Aluminium zusätzliche Legierungsbestandteile wie Niob und Molybdän aufweisen. Ein Beispiel für eine derartige TNM-Legierung ist Ti43Al-4Niob-NMO (mit den entsprechenden Zahlenangaben als Atomprozentanteil des entsprechenden Legierungselements). Derartige Legierungen können durch Variation der chemischen Zusammensetzung und einer entsprechenden thermomechanischen Behandlung für unterschiedliche Anwendungen optimiert werden. Da jedoch das Eigenschaftsprofil stark von der eingestellten Mikrostruktur bzw. dem Gefüge des Werkstoffs nach einer entsprechenden thermomechanischen Behandlung abhängt, ist es für den Serieneinsatz erforderlich, dass die Mikrostruktur einer Qualitätskontrolle unterzogen wird, um sicherzustellen, dass für die geplante Anwendung die Eigenschaften ausreichend sind.

Für die genannten TiAl - Legierungen ist es beispielsweise von Bedeutung, in welchem Anteil bestimmte Phasen im Gefüge vorhanden sind, wie beispielsweise der Anteil der globularen γ - Phase und/oder der β - Phase.

Gemäß dem bisherigen Stand der Technik ist es üblich, zur Gefügecharakterisierung lichtmikroskopische Untersuchungen durchzuführen, wobei entsprechenden Materialproben präpariert werden müssen. Hierzu werden aus einer Charge von Bauteilen, die die gleichen thermomechanischen Behandlungen durchlaufen, entweder Probenstücke aus einer Stichprobe der Bauteile ausgeschnitten oder aus einem extra dafür vorgesehenen Probenkörper entnommen, der zusammen mit den Bauteilen entsprechend behandelt worden ist. Für die lichtmikroskopischen Untersuchung müssen entsprechende Schliffe angefertigt und anschließend im Lichtmikroskop untersucht werden. Die Bestimmung der einzelnen Phasen und Volumenanteile ist somit entsprechend aufwändig. Eine weitere Möglichkeit besteht darin, die angefertigten Schliffe der Proben durch rasterelektronenmikroskopische Untersuchungen für eine Bestimmung der Phasenanteile einzusetzen. Allerdings ist auch hier der Aufwand für die Bestimmung der Mikrostruktur weiterhin hoch.

Noch eine Möglichkeit zu qualitativen und quantitativen Bestimmung der Phasenanteile in einem Gefüge ist durch die Röntgenbeugung gegeben (siehe z.B. Novoselova et al. : Experimental study of the effects of heat treatment on microstructure and grain size of a gamma TiAl alloy, Intermetallics 11(2003) 491-499).

Dieses Verfahren ist zwar aufgrund des geringeren Aufwands deutlich kostengünstiger, aber es erlaubt nicht die Unterscheidung von Phasen, die in unterschiedlichen Formen, wie beispielsweise als Primär- und Sekundärbestandteile in unterschiedlicher Geometrie, vorliegen.

Bei TiAl - Legierungen besteht beispielsweise das Problem, dass nicht zwischen globularer γ-Phase und lamellaren γ - Phasen unterschieden werden kann, welche sich vorwiegend sekundär aus α₂ - Phasen ausscheiden.

### OFFENBARUNG DER ERFINDUNG

### AUFGABE DER ERFINDUNG

Es ist deshalb Aufgabe der vorliegenden Erfindung, ein Verfahren zur Qualitätskontrolle von Bauteilen bereitzustellen, welches den Aufwand für die Qualitätskontrolle reduziert, aber zuverlässige Aussagen über das Eigenschaftsprofil der Bauteile ermöglicht.

### TECHNISCHE LÖSUNG

Diese Aufgabe wird gelöst durch ein Verfahren mit den Merkmalen des Anspruchs 1. Vorteilhafte Ausgestaltungen sind Gegenstand der abhängigen Ansprüche.

Die Erfindung geht aus von der Überlegung, dass wesentliche Informationen für die Charakterisierung von Bauteilen nicht erst nach der endgültigen Fertigstellung der Bauteile erhalten werden können, sondern bereits in einem früheren Stadium. Beispielsweise sind bei den oben geschilderten TiAl - Legierungen die globularen γ - Phasenbestandteile und β - Phasenbestandteile für das Eigenschaftsprofil der Werkstoffe wichtig. Diese Phasenbestandteile lassen sich jedoch nicht erst nach der Fertigstellung der Bauteile bestimmten, sondern bereits in einem früheren Stadium nach einem bestimmten Wärmebehandlungsschritt. In diesem Stadium kann das Material auch ohne Beeinflussung durch weitere Phasenbestandteile untersucht werden, die erst bei nachfolgenden Wärmebehandlungsschritten entstehen, wie die lamellare γ-Phase. Entsprechend lassen sich einem früheren Stadium der Herstellung kostengünstigere Verfahren zur Charakterisierung der Bauteile einsetzen, wie beispielsweise die Röntgenbeugung.

Folglich wird vorgeschlagen, bei der Qualitätskontrolle von Bauteilen, die einer Wärmebehandlung unterzogen werden und die ein Gefüge aufweisen, welches mindestens eine Phase umfasst, die in mindestens zwei unterschiedlichen Formen im fertigen Gefüge der Bauteile vorliegt, eine Untersuchung mittels Röntgenbeugung nach einem Wärmebehandlungsschritt durchzuführen, bei dem die Phase in einer einzigen Form im Gefüge vorliegt. Um das Gefüge bei der entsprechende Wärmebehandlungstemperatur einzufrieren, wird zumindest das zu untersuchende Bauteil oder ein parallel zu dem Bauteil behandelter Probenkörper so abgeschreckt, dass der Gefügezustand eingefroren wird. In diesem eingefrorenen Zustand kann mittels Röntgenbeugung der Phasenanteil qualitativ und/oder quantitativ untersucht werden.

Bei TiAl - Legierungen und insbesondere TNM - Legierungen kann somit ein Wärmebehandlungsschritt durchgeführt werden, bei dem die γ - Phase nur in globularer Form vorliegt. Ein derartiger Wärmebehandlungsschritt ist üblicherweise Bestandteil eines mehrstufigen Wärmebehandlungsprozesses für entsprechende TiAl - Bauteile, sodass kein zusätzlicher Wärmebehandlungsschritt eingeführt werden muss. Bei Bedarf wäre jedoch auch dies denkbar.

Bei TiAl - Bauteilen kann das Bauteil oder die Probe bei einer Temperatur im Bereich von 20°C über bis 50°C unter der γ - Solvus - Temperatur ausgelagert werden, um einen definierten globularen γ - Phasenanteil einzustellen. Die Solvus - Temperatur stellt hierbei die Grenze in einem Phasendiagramm für den TiAl - Werkstoff dar, bei deren Über- oder Unterschreiten sich γ - Phase auflöst bzw. umgekehrt bildet.

Um den Gefügezustand bei dem Wärmebehandlungsschritt, bei dem die interessierende Phase, wie beispielsweise die globulare γ - TiAl - Phase in dieser einzigen Form im Gefüge vorliegt, einzufrieren, wird das zu untersuchende Bauteil oder die Probe von der Wärmebehandlungstemperatur abgeschreckt. Bei einer Ti-Al - Legierung kann dies so durchgeführt werden, dass kein lamellares γ - TiAl ausgeschieden wird. Entsprechend liegt das abgeschreckte Bauteil bzw. die abgeschreckte Probe mit einem rein globularen γ - TiAl - Anteil vor, welcher nunmehr mittels Röntgenbeugung qualitativ und/oder quantitativ identifiziert werden kann. Zusätzlich lässt sich aus dem Beugungsmuster auch der Anteil der β-Phase bestimmen.

Damit kann in einfacher Weise der Anteil der globularen γ - Phase und der β - Phase in einem entsprechenden Bauteil ermittelt werden. Sofern Bauteile in einer Charge die gleiche Zusammensetzung aufweisen und identisch behandelt worden sind, kann durch Untersuchung eines Bauteils aus dieser Charge oder eines Probenkörpers, der zusammen mit den Bauteilen der Charge behandelt worden ist und ebenfalls die identische Zusammensetzung aufweist, eine Qualitätskontrolle bezüglich der wirksamen Einstellung eines Gefüges mit bestimmten Anteilen der globularen γ - Phase und/oder der β - Phase für diese Charge durchgeführt werden.

Anschließend können die Bauteile einer Charge, aus denen das zu untersuchende Bauteil entnommen worden ist oder mit denen zusammen eine entsprechende Probe behandelt worden ist, weiteren Wärmebehandlungsschritten unterzogen werden, um das endgültige Gefüge einzustellen. Allerdings sollten die weiteren Wärmebehandlungsschritte nachfolgend dem bestimmten Wärmebehandlungsschritt, bei dem die γ-Phase in globularer Form vorgelegen hat und zur Untersuchung mittels Röntgenbeugung eingefroren worden ist, lediglich bei Temperaturen stattfinden, die unterhalb der Temperatur liegen, die bei dem bestimmten Wärmebehandlungsschritt aufgebracht worden war, um zu vermeiden, dass der Anteil der globularen γ-Phase wieder verändert wird.

Nach der endgültigen Wärmebehandlung der Bauteile der entsprechenden Charge kann eine weitere Charakterisierung der Bauteile bzw. von Stichproben davon durchgeführt werden, wie beispielsweise eine weitere Röntgenbeugung, um den Gesamtanteil der γ - Phase zu bestimmen.

Für die Untersuchung mittels Röntgenbeugung muss ein Bauteil oder ein Teil davon bzw. eine Probe, die parallel zu den Bauteilen einer Charge entsprechend mit behandelt worden ist, präpariert werden. Insbesondere kann eine Messfläche im Inneren des Bauteils oder der Probe präpariert werden, indem das Bauteil oder die Probe geschnitten wird, um so Informationen über das Kerngefüge zu erhalten. Üblicherweise können die Messflächen elektrolytisch oder mechanisch poliert werden, um mechanische Eigenspannungen in der Schnittfläche, die zu einer Beeinträchtigung des Beugungsmusters führen könnten, zu eliminieren.

Die Auswertung der Beugungsaufnahmen kann automatisiert erfolgen, sodass eine kostengünstige Qualitätskontrolle von Bauteilen in einer Serienfertigung möglich ist.

Obwohl das Verfahren zur Qualitätskontrolle von Bauteilen speziell für das Beispiel von TiAl - Legierungen beschrieben worden ist, für welche es sich aufgrund der Gefügestruktur und der thermomechanischen Behandlung von TiAl - Bauteilen anbietet, ist das Verfahren gleichwohl auch für andere Werkstoffe mit vergleichbaren Voraussetzungen geeignet.

## Patentansprüche

1. Verfahren zur Qualitätskontrolle von Bauteilen, die aus TiAl - Legierungen gebildet sind oder diese umfassen, insbesondere TNM - Legierungen, und die einer Wärmebehandlung unterzogen werden, wobei die Bauteile ein Gefüge aufweisen, welches mindestens eine Phase umfasst, die in mindestens zwei unterschiedlichen Formen im Gefüge der Bauteile vorliegt,
**dadurch gekennzeichnet, dass**
- mindestens ein Bauteil oder eine in Bezug auf das Material identische Probe einem Wärmebehandlungsschritt unterzogen werden,
- bei dem das Bauteil oder die Probe bei einer Temperatur ausgelagert werden, bei der
- die Phase in einer einzigen Form im Gefüge vorliegt und
- das Bauteil oder die Probe bei einer Temperatur im Bereich von 20° C über bis 50° C unter der γ - Solvus - Temperatur ausgelagert wird und
- der Gefügezustand bei der Wärmebehandlungstemperatur durch Abschrecken des Bauteils oder der Probe von der Temperatur des Wärmebehandlungsschritts so eingefroren wird, dass kein lamellares γ - TiAl ausgeschieden wird,
wobei die Probe oder das Bauteil in diesem Zustand nach dem Abschrecken einer Untersuchung mittels Röntgenbeugung unterzogen werden, um qualitativ und/oder quantitativ die Phase zu identifizieren.

2. Verfahren nach Anspruch 1,
**dadurch gekennzeichnet, dass**
das Bauteil oder die Probe zusammen mit anderen Bauteilen einer Charge dem Wärmebehandlungsschritt unterzogen werden und die Bauteile der Charge mindestens einem weiteren Wärmebehandlungsschritt unterzogen werden und eine weitere Charakterisierung der Bauteile der Charge nach der weiteren Wärmebehandlung erfolgt.

3. Verfahren nach einem der vorhergehenden Ansprüche,
**dadurch gekennzeichet, dass**
das Bauteil oder die Probe zur Untersuchung mittels Röntgenbeugung präpariert werden, wobei insbesondere durch Trennen eine Messfläche im Inneren des Bauteils oder der Probe erzeugt wird.

4. Verfahren nach einem der vorhergehenden Ansprüche,
**dadurch gekennzeichnet, dass**
das Verfahren für Bauteile eingesetzt wird, die neben Titan und Aluminium Anteile an Niob und Molybdän umfassen.

5. Verfahren nach einem der vorhergehenden Ansprüche,
**dadurch gekennzeichnet, dass**
der Wärmebehandlungsschritt, bei dem die Phase in einer einzigen Form im Gefüge vorliegt, ein Wärmebehandlungsschritt ist, bei dem die γ - Phase in globularer Form vorliegt.

6. Verfahren nach einem der vorhergehenden Ansprüche,
**dadurch gekennzeichnet, dass**
die Auswertung der Beugungsaufnahmen automatisiert erfolgt.

## Claims

1. A method for the quality control of components which are formed from TiAl alloys or comprise these, in particular TNM alloys, and which are subjected to a heat-treatment, wherein the components have a structure which comprises at least one phase that is present in at least two different forms in the structure of the components,
**characterised in that**
- at least one component or a sample that is identical with respect to the material is subjected to a heat-treatment step,
- in which the component or the sample is aged at a temperature at which
- the phase is present in a single form in the structure, and
- the component or the sample is aged at a temperature in the range from 20°C up to 50°C under the γ-solvus temperature, and
- the structural state at the heat-treatment temperature is frozen by quenching the component or the sample from the temperature of the heat-treatment step in such a way that no lamellar γ-TiAl is deposited,
wherein the sample or the component in this state after quenching is subjected to an investigation by means of X-ray diffraction in order to identify the phase qualitatively and/or quantitatively.

2. A method according to claim 1,
**characterised in that**
the component or the sample together with other components of a batch are subjected to the heat-treatment step, and the components of the batch are subjected at least to one further heat-treatment step, and further characterisation of the components of the batch is effected after the further heat-treatment.

3. A method according to one of the preceding claims,
**characterised in that**
the component or the sample is prepared for the investigation by means of X-ray diffraction, wherein in particular by separation a measuring surface is produced in the interior of the component or the sample.

4. A method according to one of the preceding claims,
**characterised in that**
the method is used for components that comprise in addition to titanium and aluminium portions of niobium and molybdenum.

5. A method according to one of the preceding claims,
**characterised in that**
the heat-treatment step, in which the phase is present in a single form in the structure, is a heat-treatment step in which the γ-phase is present in a globular form.

6. A method according to one of the preceding claims,
**characterised in that**
the evaluation of the diffraction patterns is effected in an automated manner.

## Revendications

1. Procédé de contrôle qualité de composants formés à partir d'alliages en TiAl ou les comprenant, en particulier d'alliages TNM, et soumis à un traitement thermique, les composants présentant un squelette qui renferme au moins une phase existant sous au moins deux formes différentes dans le squelette des composants, **caractérisé en ce que**
- au moins un composant ou un échantillon identique sur le plan de la matière est soumis à une étape de traitement thermique,
- lors de laquelle le composant ou l'échantillon est exposé(e) à une température à laquelle
- la phase existe sous une unique forme dans le squelette et
- le composant ou l'échantillon est exposé à une température située dans la plage de 20°C à plus de 50°C en dessous de la température de solvus γ et
- l'état du squelette à la température de traitement thermique est gelé par trempe du composant ou de l'échantillon depuis la température de l'étape de traitement thermique de manière à n'y avoir aucune précipitation de y - TiAl lamellaire, l'échantillon ou le composant étant soumis dans cet état, après la trempe, à une analyse par diffraction des rayons X pour identifier la phase de manière qualitative et/ou quantitative.

2. Procédé selon la revendication 1, **caractérisé en ce que** le composant ou l'échantillon est soumis conjointement avec d'autres composants d'un lot à l'étape de traitement thermique et les composants du lot sont soumis à au moins une étape de traitement thermique supplémentaire et une caractérisation supplémentaire des composants du lot s'effectue auprès le traitement thermique supplémentaire.

3. Procédé selon l'une des revendications précédentes, **caractérisé en ce que** le composant ou l'échantillon est préparé pour l'analyse par diffraction des rayons X, en aménageant une surface de mesure à l'intérieur du composant ou de l'échantillon, notamment par coupure.

4. Procédé selon l'une des revendications précédentes, **caractérisé en ce que** le procédé est mis en oeuvre pour des composants comprenant des fractions de niobium et de molybdène en plus du titane et de l'aluminium.

5. Procédé selon l'une des revendications précédentes, **caractérisé en ce que** l'étape de traitement thermique lors de laquelle la phase existe sous une forme unique dans le squelette est une étape de traitement thermique dans laquelle la phase γ existe sous une forme globulaire.

6. Procédé selon l'une des revendications précédentes, **caractérisé en ce que** l'évaluation des clichés de diffraction s'effectue de manière automatisée.
